# EUROPÄISCHE PATENTANMELDUNG

(11) **EP 1 634 860 A2**
(43) Veröffentlichungstag der Anmeldung: **15.03.2006**
(21) Anmeldenummer: 05018236.9
(22) Anmeldetag: 23.08.2005
(51) Int. Cl.: C04B 35/573, C04B 35/80, C04B 38/00, C04B 35/83

(54) **Verfahren zur Herstellung eines Carbidkeramikmaterials, Carbidkeramikmaterial, Vorkörper für ein carbidkeramisches Bauteil und Verfahren zur Bereitstellung eines Ausgangsmaterials für einen Vorkörper für keramisches Material**

(30) Priorität: 08.09.2004 DE 102004043985
(71) Anmelder: Deutsches Zentrum für Luft- und Raumfahrt e.V., 53175 Bonn (DE)
(72) Erfinder: Schmidt, Jens, Dr., 70736 Fellbach (DE); Gahr, Michaela, 89275 Elchingen (DE); Schulte, Rüdiger, 70567 Stuttgart (DE); Hofenauer, Andreas, 82223 Eichenau (DE); Treusch, Olaf, 82266 Inning (DE); Tröger, Fritz, 85778 Haimhausen (DE); Wegener, Gerd, Prof. Dr., 82166 Gräfelfing (DE); Fromm, Jörg, Prof. Dr., 82211 Herrsching (DE)
(74) Vertreter: Hoeger, Stellrecht & Partner Patentanwälte

(57) **Zusammenfassung**

Um ein Verfahren zur Herstellung eines Carbidkeramikmaterials, insbesondere Siliciumcarbidkeramikmaterials, bei welchem aus einem Ausgangsmaterials, welches cellulosehaltiges Pulver umfaßt, ein poröser Vorkörper hergestellt wird, der Vorkörper durch Pyrolyse in einen offenporösen Kohlenstoffkörper umgewandelt wird und der Kohlenstoffkörper durch Infiltration von Silicium umfassenden Materialien in eine Silicium umfassende Carbidkeramik umgewandelt wird, bereitzustellen, mittels welchem sich ein schadenstolerantes Carbidkeramikmaterial herstellen läßt, ist vorgesehen, daß zur Herstellung des Ausgangsmaterials Kohlenstoff-Kurzfasern verwendet werden.

## Beschreibung

Die Erfindung betrifft ein Verfahren zur Herstellung eines Carbidkeramikmaterials, insbesondere Siliciumcarbidkeramikmaterials, bei welchem aus einem Ausgangsmaterial, welches cellulosehaltiges Pulver umfaßt, ein poröser Vorkörper hergestellt wird, der Vorkörper durch Pyrolyse in einen offenporösen Kohlenstoffkörper umgewandelt wird und der Kohlenstoffkörper durch Infiltration von Silicium umfassenden Materialien in eine Silicium umfassende Carbidkeramik umgewandelt wird.

Die Erfindung betrifft ferner ein Carbidkeramikmaterial.

Weiterhin betrifft die Erfindung einen Vorkörper für ein carbidkeramisches Bauteil, insbesondere für ein aus einer Siliciumcarbidkeramik hergestelltes Bauteil, aus welchem durch Pyrolyse ein silicierbarer Kohlenstoffkörper herstellbar ist, wobei der Vorkörper mindestens gebundenes cellulosehaltiges Pulver als Ausgangsbestandteil aufweist.

Weiterhin betrifft die Erfindung ein Verfahren zur Bereitstellung eines Ausgangsmaterials für einen Vorkörper für ein keramisches Bauteil.

Die Erfindung betrifft ferner die Verwendung eines Granulats.

Aus der DE 199 47 731 A1 ist ein Verfahren zur Herstellung eines Bauteils aus SiC-Keramik bekannt, bei dem ein Ausgangskörper aus cellulosehaltigem Material pyrolysiert und nachfolgend in den pyrolysierten Ausgangskörper Silicium infiltriert wird, das wenigstens teilweise mit Kohlenstoff zu SiC reagiert, wobei als Ausgangskörper ein technisches Halbzeug eingesetzt wird, das aus Bestandteilen in Form von Spänen und/oder einer oder mehreren Lagen aus cellulosehaltigem Material, gebunden mit pyrolysierbarem Bindemittel, hergestellt wird und wobei das Gefüge des Bauteils durch die Wahl und die Massenanteile des cellulosehaltigen Materials zu dem Bindemittel eingestellt wird.

In der nicht vorveröffentlichten DE 103 29 822 A1 ist ein Verfahren zur Herstellung von Strukturkeramiken und/oder Funktionskeramiken aus Siliciumcarbidkeramik bekannt, bei welchem aus einem cellulosehaltigen Werkstoff ein poröser Vorkörper hergestellt wird, der poröse Vorkörper mittels Pyrolyse in einen offenporösen Kohlenstoffkörper umgewandelt wird und der offenporöse Kohlenstoffkörper durch Infiltration von Silicium umfassenden Materialien in eine Silicium umfassende Carbidkeramik, insbesondere Siliciumcarbidkeramik, umgewandelt wird, wobei zur Herstellung des Vorkörpers als Ausgangsbestandteil mindestens cellulosehaltiges Pulver verwendet wird.

Ferner ist in dieser Anmeldung ein Bauteil aus Strukturkeramik und/oder Funktionskeramik, umfassend einen mit Silicium umfassenden Materialien infiltrierten und dadurch im wesentlichen Silicium umfassenden Carbid, insbesondere Siliciumcarbid, keramisierten Kohlenstoffkörper offenbart, wobei der Kohlenstoffkörper durch Verwendung von mindestens cellulosehaltigem Pulver und Bindemittel als Ausgangsbestandteile eine im wesentlichen homogene Porenstruktur aufweist.

Weiterhin ist in der genannten Anmeldung ein Vorkörper zur Herstellung von Strukturkeramik und/oder Funktionskeramik aus Silicium umfassender Carbidkeramik, insbesondere Siliciumcarbidkeramik, durch Infiltration von Silicium umfassenden Materialien in einen aus einem derartigen Vorkörper durch Pyrolyse hergestellten Kohlenstoffkörper offenbart, wobei der Vorkörper mindestens gebundenes cellulosehaltiges Pulver als Ausgangsbestandteil aufweist.

Der Erfindung liegt die Aufgabe zugrunde, ein Verfahren der eingangs genannten Art bereitzustellen, mittels welchem sich ein schadenstolerantes Carbidkeramikmaterial herstellen läßt.

Diese Aufgabe wird bei dem eingangs genannten Verfahren erfindungsgemäß dadurch gelöst, daß zur Herstellung des Ausgangsmaterials Kohlenstoff-Kurzfasern verwendet werden.

Mittels des erfindungsgemäßen Verfahrens läßt sich ein faserverstärktes schadenstolerantes Carbidkeramikmaterial und damit ein schadenstolerantes Bauteil herstellen.

Durch die Einbeziehung von Kohlenstoff-Kurzfasern läßt sich ein Gefüge herstellen, bei dem Kohlenstoff-Kurzfasern in eine Si/SiC-reiche Keramik eingebettet sind. Das Carbidkeramikmaterial enthält einen hohen freien SiliciumAnteil und SiC-Anteil und ist rißfrei. Die entsprechend hergestellten Carbidkeramikmaterialien weisen einen erhöhten KIC-Wert auf.

In solchen Materialien läßt sich die Rißenergie durch die Kohlenstoff-Kurzfasern verbrauchen. Kohlenstoff-Kurzfasern werden umlaufen und/oder aus dem Matrixgefüge herausgezogen (Faser-Pull-Out) und/oder durchbrochen; diese Prozesse verbrauchen die Rißenergie.

Mittels des erfindungsgemäßen Verfahrens lassen sich als Vorkörper homogen aufgebaute Holzwerkstoffkörper durch Pressen herstellen, die mittels Pyrolyse und Silicierung in schadenstolerante Siliciumcarbidkeramiken umgesetzt werden.

Durch die Verwendung von cellulosehaltigem Pulver zur Herstellung des Vorkörpers läßt sich eine gute Durchmischung zwischen den Kohlenstoff-Kurzfasern und den weiteren Ausgangsbestandteilen des Ausgangsmaterials erreichen. Es läßt sich dadurch ein Vorkörper mit im wesentlichen homogener Dichte und Porosität herstellen. Dadurch lassen sich Carbidkeramikmaterialien mit reproduzierbaren Eigenschaften herstellen.

Durch das erfindungsgemäße Verfahren lassen sich Vorkörper endkonturnah über Pressen herstellen. Während der Pyrolyse erfolgt eine nur geringe Schrumpfung, so daß sich ein Bauteil auf einfache Weise endkonturnah insbesondere mit geringer Schrumpfung und ohne Verzug herstellen läßt. Durch Faserzumischung im Ausgangsmaterial ist die Schrumpfung beim Pressen geringer und bei der Pyrolyse geringer. Das hergestellte Carbidkeramikmaterial weist auch eine höhere Thermoschockbeständigkeit auf. Nach dem Pressen, nach der Pyrolyse und nach der Silicierung ist jeweils eine gute Matrix-Kohlenstoff-Kurzfasern-Anbindung erreicht, die für eine Rißfreiheit und eine erhöhte Thermoschockbeständigkeit sorgt.

Weiterhin ist die Neigung des erfindungsgemäß hergestellten Carbidkeramikmaterials zur Delamination verringert.

Wenn das Ausgangsmaterial Kurzfasern enthält, dann ist eine homogene Durchmischung möglich, so daß sich homogene faserverstärkte Bauteile herstellen lassen. Weiterhin ist eine gute Verarbeitbarkeit des Ausgangsmaterials sichergestellt. Beispielsweise lassen sich Preßformen schnell und einfach füllen. Es ist eine exakte Dosierung möglich. Dadurch entsteht kein Materialverlust. Das Ausgangsmaterial läßt sich auch für das Spritzgießen oder Extrudieren einsetzen. Es ist möglich, mit Phenolharz als duroplastisches Bindemittel ein zum Spritzgießen für faserverstärkte Bauteile geeignetes Ausgangsmaterial bereitzustellen.

Mittels des erfindungsgemäßen Verfahrens hergestellte Bauteile aus einem Carbidkeramikmaterial lassen sich beispielsweise als hochsteife Leichtbaustrukturen in der Halbleitertechnologie einsetzen; ein Anwendungsfall ist eine Tragstruktur für einen Silicium-Waver oder einen Objektivträger.

Entsprechende Bauteile lassen sich beispielsweise auch für den ballistischen Schutz einsetzen, wie beispielsweise für Leichtbaupanzerungen.

Weiterhin sind Friktionsanwendungen möglich, wie beispielsweise Bremsbeläge.

Insbesondere durch Verwendung von Pech-Kurzfasern als Kohlenstoff-Kurzfasern läßt sich ein schadenstolerantes Bauteil herstellen.

Das erfindungsgemäß hergestellte Carbidkeramikmaterial läßt sich auch für Wärmetauscher und insbesondere Plattenwärmetauscher einsetzen, wie sie beispielsweise in der nicht vorveröffentlichten DE 103 61 346 A1 offenbart und beschrieben sind.

Vorteilhaft ist es, wenn die Faserlänge der Kohlenstoff-Kurzfasern so klein gewählt wird, daß diese sich mit Pulveranteilen des Ausgangsmaterials mischen lassen. Dadurch läßt sich ein homogener Vorkörper herstellen. Falls gewünscht, läßt sich auch ein isotroper Vorkörper herstellen.

Es ist insbesondere für eine endkonturnahe Herstellung eines Bauteils günstig, wenn die Faserlänge der Kohlenstoff-Kurzfasern so kurz gewählt wird, daß bei der Herstellung des Vorkörpers durch Pressen ein mindestens näherungsweise flächenisotropes Verhalten des Ausgangsmaterials vorliegt.

Aus dem gleichen Grund ist es günstig, wenn die Faserlänge der Kohlenstoff-Kurzfasern so kurz gewählt wird, daß bei der Pyrolyse ein mindestens näherungsweise flächenisotropes Verhalten des Kohlenstoffkörpers vorliegt.

Ferner ist es günstig, wenn die Faserlänge der Kohlenstoff-Kurzfasern und/oder der Faseranteil so gewählt wird, daß die Längenschwindung eines hergestellten Bauteils im Vergleich zum Vorkörper kleiner 10 % und insbesondere kleiner 5 % ist. Dies ermöglicht gerade eine endkonturnahe Bauteilherstellung.

Es hat sich als günstig erwiesen, wenn die Länge der Kohlenstoff-Kurzfasern kleiner 6 mm ist. Es ergeben sich dann die oben erwähnten Vorteile wie beispielsweise Rißfreiheit und geringere Delaminationsneigung.

Insbesondere ist es vorteilhaft, wenn die Länge der Kohlenstoff-Kurzfasern kleiner als 3 mm ist.

Als besonders vorteilhaft hat es sich erwiesen, wenn die Länge der Kohlenstoff-Kurzfasern kleiner 1 mm ist und insbesondere kleiner 0,5 mm ist. Es haben sich so Carbidkeramikmaterialien mit einem großen KIC-Wert herstellen lassen, welcher insbesondere über 2,8 MPa m^{0,5} liegt.

Insbesondere sind oder werden die Kohlenstoff-Kurzfasern dem Ausgangsmaterial zugemischt. Die Kohlenstoff-Kurzfasern können dabei direkt oder vorbearbeitet zugemischt werden.

Es kann günstig sein, wenn mit einer Imprägnierungs-Umhüllung versehene Kohlenstoff-Kurzfasern dem Ausgangsmaterial zugemischt sind oder werden. Die Imprägnierungs-Umhüllung dient dazu, bei der Silicierung die Kohlenstoff-Kurzfasern vor der Siliciumschmelze zu schützen. Dadurch läßt sich gewährleisten, daß die Kohlenstoff-Kurzfasern bei der Silicierung nicht angegriffen werden. In einem entsprechend hergestellten Material läßt sich die Rißenergie durch Pull-Out-Effekte effektiv abbauen; die Kohlenstoff-Kurzfasern können aus ihrer Imprägnierungs-Umhüllung herausgezogen werden, insbesondere wenn diese kohlenstoffhaltig ist. Die Kohlenstoff-Kurzfasern-Kohlenstoffmatrix-Bindung ist im Vergleich zu einer Kohlenstoff-Kurzfasern-SiC-Bindung schwach. Der Pull-Out-Effekt wiederum führt zu einer Erhöhung der Bruchzähigkeit. Insbesondere werden die Kohlenstoff-Kurzfasern mit einem Kohlenstoff umfassenden Material umhüllt. Das Material weist dabei vorzugsweise eine geringe Mikroporosität auf, so daß bei der Silicierung die Siliciumschmelze die Kohlenstoff-Kurzfasern nicht angreifen kann. Weiterhin läßt sich über Pull-Out-Effekte die Rißenergie abbauen, da die Kohlenstoff-Kurzfasern-Kohlenstoffmatrix-Bindung im Vergleich zu der Kohlenstoff-Kurzfasern-SiC-Bindung schwach ist.

Beispielsweise werden die Kohlenstoff-Kurzfasern mit einer Pechharzschicht umhüllt. Eine solche Pechharzschicht weist keine Mikroporosität auf, so daß die Kohlenstoff-Kurzfasern effektiv geschützt sind.

Es kann vorgesehen sein, daß die Pechharzschicht graphitiert wird. Die Graphitierung erfolgt insbesondere bei einer Temperatur oberhalb von 2000°C. Durch die Graphitierung wird eine Kohlenstoffstruktur mit graphitischen Eigenschaften erzielt. Graphit als Imprägnierungsumhüllung erleichtert das Herausziehen der Faser aus der umgebenden Matrix durch Faser-Pull-Out. Dadurch läßt sich ein Werkstoff mit hoher Schadenstoleranz bereitstellen. Die Graphitierung von mit Pechharz beschichteten Fasern kann vor dem Warmpressen bzw. der Verdichtung von Fasermischungen erfolgen oder in einem hergestellten C/C-Bauteil im Anschluß an eine Pyrolyse erfolgen.

Beispielsweise werden Fasern mit Pechharz in Kontakt gebracht und das Pechharz anschließend vorgehärtet. Durch die Vorhärtung erfolgt eine Anhärtung des Pechharzes an die Fasern, um diese mit der Imprägnierungs-Umhüllung zu umgeben.

Das Pechharz kann in flüssiger Form oder Pulverform vorliegen.

Es ist auch möglich, daß Pechharz auf Fasern aufgespritzt wird. Beispielsweise können Endlosfasern (Rovings) außerhalb eines Mischers mit Pechharz durch Aufspritzen und mit Flüssigharz imprägniert, angehärtet und dann zu Kurzfasern (mit Umhüllung) geschnitten werden. Wenn darauf geachtet wird, daß das Pechharz nicht vollständig aushärtet, dann kann die Bindungsfähigkeit zur Matrix/im Pulver beim Verpressen erhalten werden.

Die Pechharzvorhärtung erfolgt insbesondere durch Temperaturerhöhung, beispielsweise durch Temperung oder Mikrowellenheizung.

Insbesondere erfolgt die Umhüllung der Kohlenstoff-Kurzfasern, d. h. deren Imprägnierung, vor der Vermischung mit dem cellulosehaltigen Pulver. Dadurch werden die weiteren Ausgangsbestandteile des Ausgangsmaterials durch die Imprägnierung nicht beeinflußt.

Günstigerweise wird als Ausgangsmaterial eine Pulver-Kohlenstoff-Kurzfasern-Mischung verwendet, wobei die Ausgangsbestandteile außerhalb der Kohlenstoff-Kurzfasern eine Partikelgröße von kleiner als 300 µm, vorzugsweise kleiner als 100 µm und besonders bevorzugt kleiner als 50 µm aufweisen. Entsprechende Pulvermischungen (ohne Kohlenstoff-Kurzfasern) sind in der nicht vorveröffentlichten DE 103 29 822 A1 offenbart. Auf dieses Dokument wird ausdrücklich Bezug genommen. Die dort beschriebenen und offenbarten Zusammensetzungen können auch für das Ausgangsmaterial mit Kohlenstoff-Kurzfasern verwendet werden.

Es kann vorgesehen sein, daß eine mindestens näherungsweise isotrope Faserorientierung eingestellt wird. Dadurch läßt sich ein homogenes, isotropes Bauteil herstellen.

Beispielsweise wird aus der Pulver-Kohlenstoff-Kurzfasern-Mischung ein Granulat hergestellt, welches dann als Ausgangsmaterial beispielsweise für einen Preßvorgang dient. In Granulatpartikeln des Granulats und damit im Ausgangsmaterial sind die Kohlenstoff-Kurzfasern isotrop orientiert. Es läßt sich dann ein bezüglich Einzelkornorientierung und Faserorientierung isotropes Ausgangsmaterial einstellen.

Der Größenbereich von Granulatpartikeln liegt insbesondere im Mikrometerbereich bis Millimeterbereich.

Das Granulat läßt sich auf einfache Weise herstellen, wenn der Pulver-Kohlenstoff-Kurzfasern-Mischung ein Anfeuchtmittel wie Wasser zugegeben wird. Insbesondere wenn als cellulosehaltiges Pulver Holzpulver eingesetzt wird, bilden sich Granulatpartikel, welche größer sind als die Pulverpartikel. Beispielsweise kann die Pulver-Kohlenstoff-Kurzfasermischung mit Anfeuchtmittel in einem Mischer granuliert werden. Eine Mischung kann durch Zugabe von beispielsweise ca. 100 Massen-% Wasser bezogen auf die Trockenmischung in einem Mischbehälter eines Mischers granuliert werden, wenn die Wasserzugabe sukzessive erfolgt. Dadurch sind Teilchengrößen, die im Millimeterbereich liegen und insbesondere kleiner als 5 mm mit sehr enger Kornverteilung einstellbar.

Es kann dabei vorgesehen sein, daß zur Nachbearbeitung Granulatvorpartikel auf einem Peletierteller gerollt werden.

Das durch das Anfeuchtmittel erzeugte Granulat weist einen Restfeuchtegehalt auf. Um diesen zu verringern, wird das Granulat vorzugsweise getrocknet. Beispielsweise wird das feuchte Granulat in einem Wirbelschichttrockner getrocknet. Insbesondere kann es sich bei dem Wirbelschichttrockner um einen Wirbelschicht-Vibrationstrockner handeln. Es kann dann unabhängig von der Ausgangsfeuchte eine Restfeuchte der Mischung von 5 % bis 15 % eingestellt werden, wobei die getrocknete Mischung noch preßfähig ist. Sehr kleine Restfeuchten führen zu harten, nur bedingt preßfähigen und aushärtefähigen Granulaten.

Die Trocknung wird so durchgeführt, daß keine Bindemittelaushärtung erfolgt. Dadurch ist sichergestellt, daß ein Ausgangsmaterial bereitgestellt wird, mittels welchem sich ein beispielsweise endkonturnah hergestellter Vorkörper herstellen läßt.

Zur Reduzierung der Trocknungstemperatur und damit zur Verringerung der Gefahr der Bindemittelaushärtung kann es vorgesehen sein, daß die Trocknung bei Unterdruckbeaufschlagung durchgeführt wird. Aus dem gleichen Grund ist es günstig, wenn alternativ oder zusätzlich zur Trocknung ein Austreibmittel wie Alkohol verwendet wird, welches einen höheren Dampfdruck aufweist als das Anfeuchtmittel (wie beispielsweise Wasser).

Ganz besonders vorteilhaft ist es, wenn Granulatpartikel gemäß ihrer Größe ausgewählt werden. Üblicherweise liegen die Granulatpartikel in einer Größenverteilung vor. Durch die Auswahl läßt sich eine definierte Größenverteilung einstellen, die vorteilhaft für beispielsweise Befüllung einer Preßform ist.

Das Granulat wird zur Größenauswahl beispielsweise gesiebt. Wenn ein Sieb mit entsprechenden Durchgangsöffnungen verwendet wird, dann lassen sich Granulatpartikelfraktionen mit einem definierten Größenbereich einstellen.

Ganz besonders vorteilhaft ist es, wenn Granulatpartikel gemäß einer bimodalen Partikelgrößenverteilung ausgewählt werden. Dadurch läßt sich eine Preßform auf effektive Weise befüllen, da sich Lücken zwischen großen Partikeln mit kleinen Partikeln füllen lassen. Durch Rütteln nach der Befüllung wird der Füllgrad (als Rütteldichte) erhöht. Weiterhin läßt sich beispielsweise durch axiales Verpressen ein (quasi-)isotroper Vorkörper herstellen. In dem entsprechenden Vorkörper liegt keine Vorzugsrichtung in der Faserorientierung und Kornorientierung vor. Die Schüttdichte läßt sich erhöhen.

Es kann auch für manche Anwendungen vorteilhaft sein, wenn ein anisotroper Vorkörper hergestellt wird. Beispielsweise ist bei einem solchen anisotropen Vorkörper in einem bestimmten Bereich die Dichte an Kohlenstoff-Kurzfasern höher als in einem anderen Bereich.

Ein anisotroper Vorkörper läßt sich auf einfache Weise herstellen, wenn Kohlenstoff-Kurzfasern beim Füllen einer Preßform einer losen Pulverschüttung (die frei von Kohlenstoff-Kurzfasern sein kann oder bereits Kohlenstoff-Kurzfasern zu einem bestimmten Anteil enthält) gesteuert zugegeben wird. Die Steuerung kann zeitlich und/oder räumlich und/oder mengenmäßig sein.

Günstig ist es, wenn das cellulosehaltige Pulver Holzpulver und/oder Cellulosepulver enthält. Beispielsweise ist es vorgesehen, daß das entsprechende Pulver aus Partikeln besteht, welche frei von einer kapillaren Zellstruktur sind. Dadurch wird die Eigenschaft und die Porosität des Vorkörpers primär durch das Mischungsverhältnis und die Partikelgröße des cellulosehaltigen Pulvers und des Bindemittels bestimmt und nicht durch die Eigenschaften und Strukturen der Partikel selbst. Es wird in diesem Zusammenhang auf die nicht vorveröffentlichte DE 103 29 822 A1 verwiesen.

Insbesondere umfaßt das Ausgangsmaterial für den Vorkörper Bindemittel wie beispielsweise Phenolharz.

Es können auch weitere Additive vorgesehen werden (siehe die nicht vorveröffentlichte DE 103 29 822 A1).

Insbesondere wird das Ausgangsmaterial zu einem Formkörper verpreßt, wobei Preßdrücke von bis zu 15 MPa vorgesehen sein können. Beispielsweise erfolgt eine axiale Verpressung.

Es ist dabei günstig, wenn der Formkörper, zu dem das Ausgangsmaterial verpreßt wurde, zum Aushärten des Bindemittels aufgeheizt wird, d. h. während des Preßvorgangs keine Aushärtung erfolgt. Dadurch wird eine homogenere Verdichtung des Formkörpers erreicht. Durch Aushärtung des Bindemittels des Formkörpers entsteht der Vorkörper.

Vorteilhaft ist es, wenn der Kohlenstoffkörper endkonturnah hergestellt wird. Durch Silicierung wird aus dem Kohlenstoffkörper das Bauteil oder eine Vorform des Bauteils hergestellt. (Durch mechanische Bearbeitung wird aus der Vorform das endgültige Bauteil hergestellt.) Durch eine endkonturnahe Bearbeitung kann auf die Endbearbeitung verzichtet werden oder diese wird erleichtert. Insbesondere sind entsprechende Teile eines Pressgesenks nicht verformbar, damit eine eventuelle Verformung des Werkzeugs mit Beeinflussung des Formergebnisses ausgeschlossen ist

Insbesondere wird eine Silicierung durch Aufschmelzen von Siliciumgranulat durchgeführt. Bevorzugterweise wird das Siliciumgranulat allseitig auf der Oberfläche des Kohlenstoffkörpers aufgebracht. Dadurch läßt sich ein gleichmäßiges und gleichzeitiges Eindringen des Siliciums in die offenen Hohlräume erreichen. Weiterhin läßt sich eine gleichmäßige Reaktion von Kohlenstoff zur Bildung von SiC im Kohlenstoffkörper erreichen. Dadurch werden während der Reaktionsinfiltration die Spannungen in dem Bauteil reduziert; damit wiederum wird die Gefahr der Rißbildung im Gefüge reduziert.

Günstig ist es, wenn eine verdichtete Oberfläche (Preßhaut) vor der Silicierung entfernt wird. Es hat sich gezeigt, daß insbesondere axialverpreßte Platten nach dem Pressen und nach der Pyrolyse bei 1650°C eine verdichtete Oberfläche (Preßhaut) aufweisen. Diese verdichtete Oberfläche ist weniger gut zugänglich für eine Siliciumschmelze als Seitenflächen des entsprechenden Bauteils. Durch mechanische Entfernung der verdichteten Oberfläche nach dem Pressen oder nach der Pyrolyse beispielsweise durch Abschleifen läßt sich eine gleichmäßigere Silicierung erreichen.

Der Erfindung liegt ferner die Aufgabe zugrunde, ein Carbidkeramikmaterial, insbesondere Siliciumcarbidkeramikmaterial, bereitzustellen, welches eine hohe Schadenstoleranz aufweist.

Diese Aufgabe wird erfindungsgemäß dadurch gelöst, daß in einer Si/SiC-reichen Keramikmatrix Kohlenstoff-Kurzfasern verteilt eingebettet sind.

Durch die hohen freien Siliciumanteile und SiC-Anteile, in welche Kohlenstoff-Kurzfasern eingebettet sind, läßt sich die Schadenstoleranz steigern. Insbesondere wird der KIC-Wert eines solchen Carbidkeramikmaterials erhöht.

Das erfindungsgemäße Carbidkeramikmaterial läßt sich mit dem erfindungsgemäßen Verfahren herstellen.

Die Vorteile des erfindungsgemäßen Carbidkeramikmaterials wurden bereits im Zusammenhang mit dem erfindungsgemäßen Verfahren erläutert.

Insbesondere sind die Kohlen stoff-Kurzfasern mindestens teilweise von einer SiC-Hülle umgeben. Durch einen erhöhten SiC-Anteil erhält man eine Rißfreiheit des entsprechenden Carbidkeramikmaterials.

Insbesondere sind die SiC-Hüllen in eine Si/SiC-Matrix eingebettet. Dadurch läßt sich effektiv Rißenergie verbrauchen. Beispielsweise kann Rißenergie dadurch verbraucht werden, daß Kohlenstoff-Kurzfasern aus dem Matrixgefüge herausgezogen werden (Faser-Pull-Out) oder Kohlenstoff-Kurzfasern umlaufen werden oder Fasern brechen.

Insbesondere ist die Länge der Kohlenstoff-Kurzfasern kleiner 6 mm und vorzugsweise kleiner 3 mm und besonders bevorzugt kleiner 1 mm und insbesondere kleiner 0,5 mm. Dadurch ergibt sich ein effektiver Rißenergieverbrauch, so daß sich ein Bauteil mit hoher Schadenstoleranz und insbesondere hoher Bruchzähigkeit herstellen läßt.

Günstig ist es, wenn eine durch Verwendung von cellulosehaltigem Pulver und Bindemittel im Ausgangsmaterial hergestellte im wesentlichen homogene Gefügestruktur erreicht ist. Dadurch läßt sich ein homogenes Carbidkeramikmaterial bereitstellen, welches eine hohe Schadenstoleranz aufweist.

Es kann dabei vorgesehen sein, daß die Kohlenstoff-Kurzfasern mindestens näherungsweise isotrop orientiert sind. Dadurch ergibt sich eine effektive Faserverstärkung des Carbidkeramikmaterials mit einer entsprechenden hohen Schadenstoleranz.

Günstig ist es, wenn die Kohlenstoff-Kurzfasern von einer Imprägnierungs-Umhüllung umgeben sind. Diese schützt die Kohlenstoff-Kurzfasern während der Imprägnierung, so daß diese von der Siliciumschmelze nicht angegriffen werden. Durch die Imprägnierungs-Umhüllung, insbesondere wenn diese kohlenstoffhaltig ist, läßt sich auch eine effektive Rißenergieaufnahme erreichen: Die Kohlenstoff-Kohlenstoff-Kurzfasern-Bindung ist erheblich schwächer als die Kohlenstoff-Kurzfasern-SiC-Bindung. Rißenergie kann durch das Herausziehen der Kohlenstoff-Kurzfasern aus ihrer Imprägnierungs-Umhüllung verbraucht werden.

Die Imprägnierungs-Umhüllung ist mindestens teilweise von einer SiC-Hülle umgeben.

Insbesondere ist es vorgesehen, daß der Si-Anteil größer 25 Massen-% ist und/oder der SiC-Anteil größer 50 Massen-% ist.

Die Erfindung betrifft ferner ein Bauteil aus Strukturkeramik und/oder Funktionskeramik, welches aus dem erfindungsgemäßen Carbidkeramikmaterial hergestellt ist. Beispielsweise werden Platten eines Platten-Wärmeübertragers mittels des erfindungsgemäßen Carbidkeramikmaterials hergestellt. Es wird auf die nicht vorveröffentlichte DE 103 61 346 A1 verwiesen. Es lassen sich beispielsweise auch Bauteile für Friktionsanwendungen wie Bremsscheiben herstellen. Weiterhin ist es möglich, Panzerplatten für den ballistischen Schutz herzustellen. Es wird auf die nicht vorveröffentlichte deutsche Patentanmeldung Nr. 10 2004 026 515.1 vom 19. Mai 2004 des gleichen Anmelders verwiesen.

Der Erfindung liegt ferner die Aufgabe zugrunde, einen Vorkörper der eingangs genannten Art bereitzustellen, auf dessen Grundlage sich ein Bauteil mit hoher Schadenstoleranz herstellen läßt.

Diese Aufgabe wird bei dem eingangs genannten Vorkörper erfindungsgemäß dadurch gelöst, daß der Vorkörper Kohlenstoff-Kurzfasern enthält.

Der erfindungsgemäße Vorkörper weist die bereits im Zusammenhang mit dem erfindungsgemäßen Verfahren und dem erfindungsgemäßen Carbidkeramikmaterial erläuterten Vorteile auf.

Weitere vorteilhafte Ausgestaltungen wurden ebenfalls bereits im Zusammenhang mit dem erfindungsgemäßen Verfahren und dem erfindungsgemäßen Carbidkeramikmaterial erläutert.

Der Erfindung liegt ferner die Aufgabe zugrunde, ein Verfahren zur Bereitstellung eines Ausgangsmaterials für einen Vorkörper für ein keramisches Bauteil bereitzustellen, mittels welchem sich eine hohe Schüttdichte und einer hoher Füllgrad für eine Preßform ergibt.

Diese Aufgabe wird bei dem genannten Verfahren erfindungsgemäß dadurch gelöst, daß eine trockene Pulvermischung des Ausgangsmaterials des Vorkörpers zur Granulatbildung angefeuchtet wird.

Wenn ausgehend von der Pulvermischung Granulatpartikel gebildet werden (die üblicherweise größer sind als die Pulverpartikel), dann kann eine effektive Partikelsortierung erfolgen. Es läßt sich dann eine Größenauswahl der Granulatpartikel durchführen, die wiederum so durchführbar ist, daß sich ein hoher Füllgrad und eine hohe Schüttgüte ergibt.

Beispielsweise lassen sich die Granulatpartikel auch so bilden, daß, wenn Kurzfasern verwendet werden, diese mindestens näherungsweise isotrop (quasiisotrop) in einem Granulatpartikel orientiert sind.

Mittels des erfindungsgemäßen Verfahrens lassen sich Bauteile (und insbesondere Vorkörper) herstellen, bei welchen bezüglich Partikelgröße und unter Umständen Faserorientierung eine homogene Verteilung vorliegt. Beispielsweise läßt sich beim Pressen eines Körpers die Preßschwindung verringern. Dies führt wiederum dazu, daß die Gefahr von Rissen im gepreßten Bauteil verringert ist.

Das erfindungsgemäße Verfahren läßt sich auf einfache Weise durchführen, wenn als Anfeuchtmittel Wasser verwendet wird.

Es kann vorgesehen sein, daß das Vorgranulat auf einem Peletierteller zur Nachbearbeitung gerollt wird. Dadurch lassen sich beispielsweise die Granulatpartikelgrößen erhöhen.

Zur Verringerung der Restfeuchte des Granulats (nach der Anfeuchtung zur Granulatbildung) wird dieses vorzugsweise getrocknet. Günstig ist es dabei, wenn die Trocknung so durchgeführt wird, daß, wenn in der trockenen Pulvermischung Bindemittel enthalten ist, keine Bindemittelaushärtung erfolgt.

Beispielsweise wird die Trocknung bei Unterdruckbeaufschlagung durchgeführt und/oder zur Trocknung ein Austreibmittel für das Anfeuchtmittel verwendet, welches einen höheren Dampfdruck als das Anfeuchtmittel aufweist. Dadurch läßt sich die (maximale) Trocknungstemperatur erniedrigen, um so eine Bindemittelaushärtung zu vermeiden.

Ganz besonders vorteilhaft ist es, wenn Granulatpartikel (insbesondere nach der Trocknung) gemäß ihrer Größe ausgewählt werden. Die Größenauswahl kann dann angepaßt an eine Anwendung erfolgen.

Die Größenauswahl läßt sich auf einfache Weise durch Sieben erreichen. Dadurch lassen sich Granulatpartikelfraktionen mit Granulatpartikeln in einem bestimmten Größenbereich erreichen.

Ganz besonders vorteilhaft ist es, wenn eine Größenauswahl gemäß einer Gaußschen Verteilung durchgeführt wird. Dadurch läßt sich eine Preßform im Vergleich zu einer losen Pulvermischung mit hoher Schüttdichte und hohem Füllgrad befüllen. Dies wiederum sorgt dafür, daß die Preßschwindung verringert ist und dadurch wiederum die Gefahr von Rissen in einem fertigen Bauteil verringert ist.

Es kann vorgesehen sein, daß der Pulvermischung Kohlenstoff-Kurzfasern zugegeben sind oder werden. In den Granulatpartikeln sind dann die Kohlenstoff-Kurzfasern im wesentlichen isotrop (quasiisotrop) orientiert. Mittels eines solchen (quasi-)isotropen Granulats lassen sich beispielsweise (quasi-)isotrope Holzwerkstoff-Vorkörper herstellen.

Erfindungsgemäß ist die Verwendung eines Granulats, welches mittels cellulosehaltigem Pulver und Kohlenstoff-Kurzfasern hergestellt ist, als Ausgangsmaterial zum Spritzgießen oder Extrudieren vorgesehen. Dabei ist das Granulat insbesondere mittels des erfindungsgemäßen Verfahrens hergestellt.

Das Ausgangsmaterial für das Granulat, welches cellulosehaltiges Pulver und Kohlenstoff-Kurzfasern und insbesondere ein duroplastisches Bindemittel wie Phenolharz umfaßt, kann vorteilhafterweise dazu verwendet werden, ein Bauteil mittels eines Spritzgießverfahrens oder Extrusionsverfahrens herzustellen.

Insbesondere umfaßt das Granulat Phenolharz als Bindemittel. Dadurch läßt sich ein Ausgangsmaterial, welches ein duroplastisches Bindemittel umfaßt, zur Herstellung eines faserverstärkten Bauteils mittels eines Spritzgießverfahrens oder Extrusionsverfahrens einsetzen.

Die nachfolgende Beschreibung vorteilhafter Ausführungsformen dient im Zusammenhang mit der Zeichnung der näheren Erläuterung der Erfindung. Es zeigen:
- Figur 1: schematisch den Verfahrensablauf eines Ausführungsbeispiels des erfindungsgemäßen Herstellungsverfahrens;
- Figur 2: eine schematische Darstellung eines Beispiels für ein hergestelltes Bauteil;
- Figur 3: schematisch die Mikrostruktur eines Ausführungsbeispiels eines erfindungsgemäßen carbidkeramischen Materials;
- Figur 4: ein Mikroschliffbild eines Ausführungsbeispiels eines erfindungsgemäßen Materials;
- Figur 5: eine Fotografie von Granulatpartikeln eines Ausgangsmaterials zur Herstellung des carbidkeramischen Materials gemäß Figur 4 und
- Figur 6: eine schematische Darstellung der Mikrostruktur eines weiteren Ausführungsbeispiels eines erfindungsgemäßen carbidkeramischen Materials.

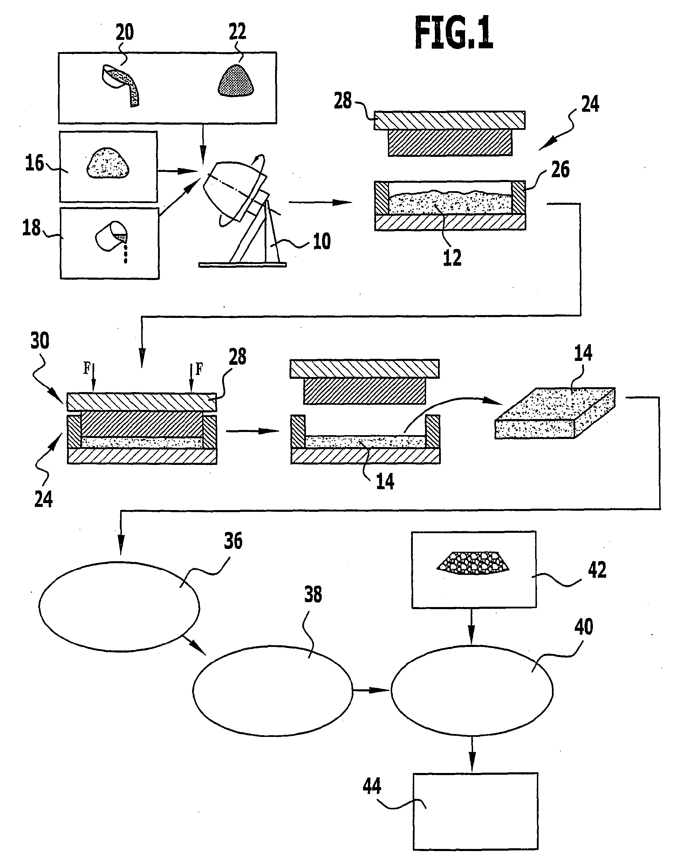

Eine Ausführungsform des erfindungsgemäßen Verfahrens zur Herstellung eines Bauteils aus einem carbidkeramischen Material ist schematisch in Figur 1 gezeigt. Es wird durch Vermischen von unterschiedlichen Ausgangsbestandteilen in einer Mischungseinrichtung 10 ein Ausgangsmaterial 12 für die Herstellung eines porösen Vorkörpers 14 bereitgestellt.

Das Ausgangsmaterial 12 umfaßt insbesondere als Ausgangsbestandteile cellulosehaltiges Pulver 16 wie beispielsweise Holzmehl und ein pulverförmiges Bindemittel 18 wie beispielsweise Phenolharz. Es können Additive 20 wie beispielsweise Kohlenstoffpulver als weitere Ausgangsbestandteile vorgesehen werden. Erfindungsgemäß enthält das Ausgangsmaterial Kohlenstoff-Kurzfasern, welche in Figur 1 mit 22 angedeutet sind. Das Ausgangsmaterial ist eine Pulver-Kohlenstoff-Kurzfasern-Mischung. Die Partikelgrößen im Pulver sind dabei vorzugsweise kleiner als 300 µm.

Die Kohlenstoff-Kurzfasern weisen eine Länge auf, welche kleiner als 6 mm und insbesondere kleiner als 1 mm ist. Ein beispielhaftes Herstellungsverfahren des Ausgangsmaterials sowie dessen Zusammensetzung ohne den Kohlenstoff-Kurzfasern-Anteil ist in der nicht vorveröffentlichten DE 103 29 822 A1 offenbart. Insbesondere sind dort typische Parameter für die Ausgangsbestandteile offenbart. Diese lassen sich auch auf das erfindungsgemäße Verfahren übertragen. Auf die Offenbarung der Anmeldung wird ausdrücklich Bezug genommen.

Die Kohlenstoff-Kurzfasern 22 können direkt der Mischung zugegeben werden oder es kann eine Imprägnierungs-Vorbehandlung erfolgt sein.

Die Kohlenstoff-Kurzfasern 22 lassen sich so vorbehandeln, daß diese von einer insbesondere kohlenstoffhaltigen Umhüllung umgeben sind, welche die Kohlenstoff-Kurzfasern bei der Silicierung vor dem Angriff der Siliciumschmelze schützt. Beispielsweise läßt sich eine solche Umhüllung über eine Vorimprägnierung mit Pechharzen wie beispielsweise Carbores herstellen.

Dazu werden die Kohlenstoff-Kurzfasern mit pulverförmigem oder flüssigem Pechharz gemischt. Es erfolgt dann eine insbesondere kurzzeitige Temperaturerhöhung, beispielsweise durch Temperung in einem Ofen oder durch Mikrowellenhärtung. Diese Temperaturerhöhung führt zu einer Anhärtung der Pechharzschicht. Dadurch haftet diese an den Kohlenstoff-Kurzfasern an und es bildet sich eine Art von Kurzfaser-Prepreg. Diese vorimprägnierten Kohlenstoff-Kurzfasern werden dann gemeinsam mit den anderen Ausgangsbestandteilen zu dem Ausgangsmaterial 12 vermischt.

Das Ausgangsmaterial 12 wird in eine Preßform 24 gegeben, welche beispielsweise einen Pulveraufnahmeteil 26 und einen Stempelteil 28 umfaßt. Der Pulveraufnahmeteil 26 und der Stempelteil 28 sind entsprechend aneinander angepaßt.

Die Preßform 24 ist insbesondere so ausgebildet, daß der hergestellte Vorkörper 14 endkonturnah zu einem herzustellenden Bauteil ist.

Es kann vorgesehen sein, daß das Ausgangsmaterial 12 mit den Kohlenstoff-Kurzfasern 22 (mit oder ohne Pechharz-Umhüllung) über die Mischungseinrichtung 10 fertig hergestellt wird und dann in das Pulveraufnahmeteil 26 geschüttet wird.

Es ist grundsätzlich auch möglich, daß eine Ausgangsmaterial-Vorstufe ohne die Kohlenstoff-Kurzfasern 22 hergestellt wird und dieses unvollständige Ausgangsmaterial dann unter Zugabe der Kohlenstoff-Kurzfasern 22 in das Pulveraufnahmeteil 26 geschüttet wird. Bei dieser Schüttungsdurchführung kann die Kohlenstoff-Kurzfasern-Zugabe räumlich und/oder zeitlich gesteuert werden und auch mengenmäßig gesteuert werden. Dadurch ist es möglich, einen anisotropen Körper 14 herzustellen, welcher beispielsweise in einem bestimmten Bereich eine höhere Kurzfaserdichte aufweist als in einem anderen bestimmten Bereich.

Es kann vorgesehen sein, die Pulvermischung aus der Mischungseinrichtung 10 direkt in den Pulveraufnahmeteil 26 der Preßform 24 zu geben.

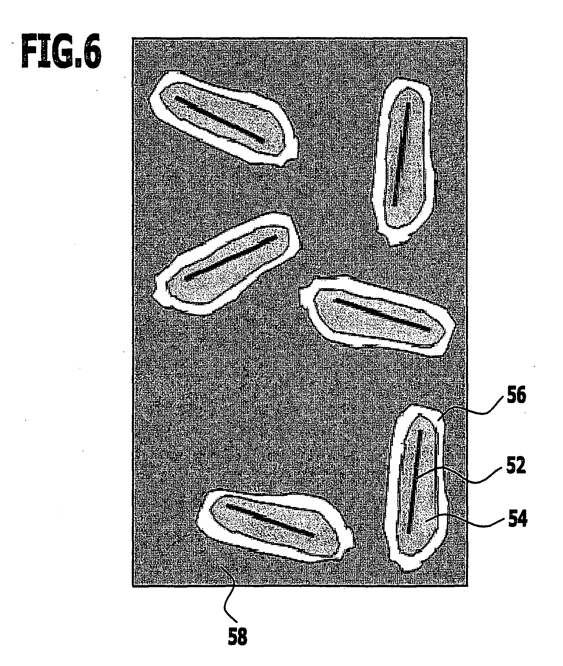

Es ist auch möglich, aus der Pulvermischung (mit den Kohlenstoff-Kurzfasern 22) ein Granulat herzustellen. Dazu wird der Pulvermischung ein Anfeuchtmittel und insbesondere Wasser zugegeben. Es werden dadurch Granulatpartikel gebildet, die eine Größe aufweisen, welche größer ist als die Größe der Pulverpartikel. Insbesondere liegt die Größe der Granulatpartikel im Mikrometer- bis Millimeterbereich (Figur 5).

Es kann vorgesehen sein, daß nach der Zugabe des Anfeuchtmittels das entstandene Granulat auf einem Peletierteller zur Nachbearbeitung gerollt wird.

Das so erzeugte Granulat enthält eine Restfeuchte, welche beispielsweise in der Größenordnung von 60 % liegt. Das Granulat wird vorzugsweise getrocknet, um den Restfeuchtegehalt zu erniedrigen und insbesondere in die Größenordnung von 5 % bis 10 % zu senken. Dazu wird das Granulat in einen Trockenschrank oder in einen Umluftofen gebracht. Die Trocknung wird so durchgeführt, daß das Bindemittel 18 in dem Ausgangsmaterial 12 nicht aushärten kann. Insbesondere erfolgt die Trocknung bei Unterdruckbeaufschlagung (d. h. bei reduzierten Gasdrücken), um die maximale Trocknungstemperatur reduzieren zu können. Ferner ist es alternativ oder zusätzlich vorgesehen, daß zur Trocknung ein Austreibmittel für das Anfeuchtmittel mit höherem Dampfdruck im Vergleich zu dem Anfeuchtmittel verwendet wird. Beispielsweise wird Alkohol als Austreibmittel verwendet; dies trägt dazu bei, daß die Trocknung bei niedrigeren Temperaturen erfolgen kann. Das Austreibmittel sorgt für ein Austreiben des Anfeuchtmittels insbesondere aus dem cellulosehaltigen Material.

Es kann auch vorgesehen sein, daß für eine verbesserte Benetzung insbesondere der Kohlenstoff-Kurzfasern 22, der Additive 20 und gegebenenfalls von SiC-Partikeln vor der Granulatbildung ein weiteres Bindemittel wie Karboxylmethylcellulose (CMC) hinzugegeben wird.

Durch die Granulatbildung lassen sich Granulatpartikel bilden, welche zumindest näherungsweise isotrop sind, d. h. keine Vorzugsrichtung in der Einzelkornorientierung und Faserorientierung aufweisen.

Die so hergestellten Granulatpartikel weisen eine multimodale Größenverteilung auf. Durch Größenauswahl, wie beispielsweise durch Sieben, lassen sich Granulatfraktionen mit bestimmten Größen der Granulatpartikel auswählen.

Besonders vorteilhaft ist es, wenn eine Größenauswahl gemäß einer bimodalen Partikelgrößenverteilung erfolgt. Dadurch läßt sich für die Preßform 24 ein hoher Füllgrad erreichen. Bei manchen Anwendungen kann auch eine Gaußsche Partikelgrößenverteilung sinnvoll sein.

Es läßt sich ein Vorkörper 14 herstellen, bei dem keine Vorzugsrichtung bezüglich der Faserorientierung und Kornorientierung vorliegt. Durch den höheren Füllgrad der Preßform 24 ist die Preßschwindung verringert. Dadurch wiederum läßt sich die Gefahr von Rissen in einem gepreßten Bauteil verringern.

In der Preßform 24 wird dann in einem Preßschritt 30 das Ausgangsmaterial 12 (mit den Kohlenstoff-Kurzfasern 22) verpreßt. In einem Aushärtungsvorgang, welcher insbesondere in der Preßform 24 stattfindet, wird das Bindemittel ausgehärtet. Der Verpressungsvorgang und der Aushärtungsvorgang für ein Ausgangsmaterial 12, welches cellulosehaltiges Pulver 16 enthält, ist in der oben erwähnten nicht vorveröffentlichten deutschen Anmeldung Nr. 103 29 822.3 beschrieben, auf die ausdrücklich Bezug genommen wird. Die zusätzlichen Kohlenstoff-Kurzfasern 22 in dem Ausgangsmaterial 12 erfordern keine wesentliche Änderung des Pressungsverfahrens und des Aushärtungsverfahrens.

In der Preßform 24 wird der Vorkörper 14 hergestellt, welcher dann entnommen werden kann. Der Vorkörper 14 ist ein Holzkörper, welcher eine Porosität aufweist.

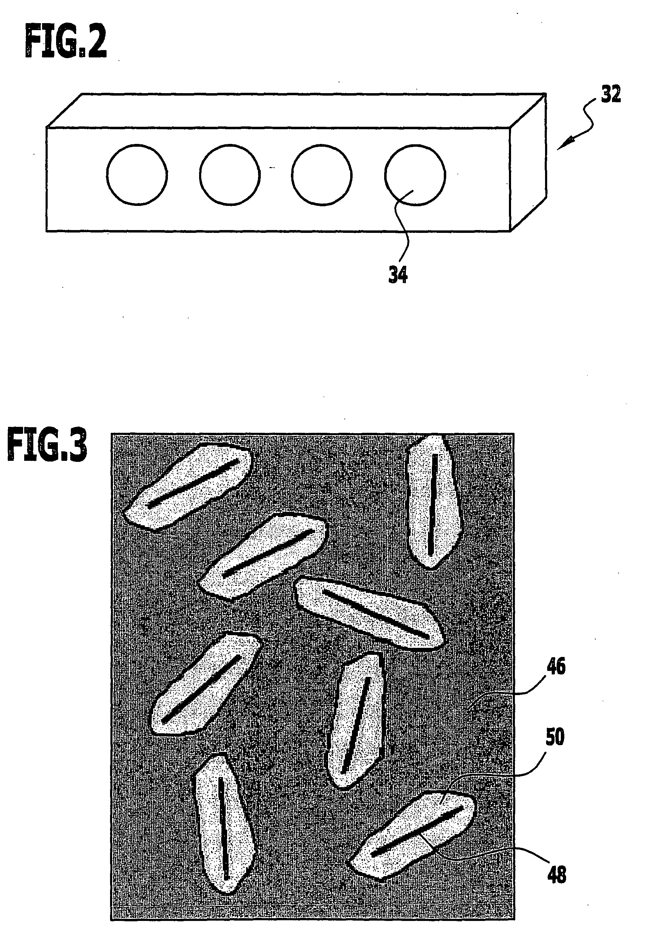

Die Preßform 24 ist so ausgestaltet, daß sich der Vorkörper 14 endkonturnah zu dem bereitzustellenden Bauteil gepreßt wird. In Figur 2 ist schematisch ein Ausführungsbeispiel eines Bauteils, welches als Ganzes mit 32 bezeichnet ist, gezeigt. Dieses Bauteil weist Bohrungen 34 auf. Die Preßform 24 ist so ausgestaltet, daß sie Gegenstücke zu den Bohrungen 34 aufweist, so daß der Vorkörper 14 endkonturnah gepreßt wird. Es sind gleiche Wandstärken zwischen den Bohrungen 34 und Seitenwänden eingestellt.

Die Länge der Kohlenstoff-Kurzfasern 22 wird so kurz gewählt, daß bei der Herstellung des Vorkörpers 14 durch Pressen ein mindestens näherungsweise flächenisotropes Verhalten des Ausgangsmaterials 12 gewährleistet ist. Weiterhin wird die Faserlänge der Kohlenstoff-Kurzfasern 22 so kurz gewählt, daß bei einem nachfolgenden Pyrolyseschritt ein mindestens näherungsweise flächenisotropes Verhalten des Kohlenstoffkörpers (siehe unten) vorliegt.

Insbesondere wird die Faserlänge der Kohlenstoff-Kurzfasern so gewählt, daß die Längenänderung eines hergestellten Bauteils (wie beispielsweise des Bauteils 32) im Vergleich zum Vorkörper 14 kleiner 5 % ist.

Der Vorkörper 14 (Holzkörper) wird nach einem Trocknungsschritt 36 in einem Pyrolyseschritt 38 pyrolysiert. Die Pyrolyse erfolgt beispielsweise bei einer Temperatur unterhalb von 1650°C in einer Inertgasatmosphäre. Die Trocknung und Pyrolyse läuft grundsätzlich ab wie in der nicht vorveröffentlichten DE 103 29 822 A1 beschrieben, auf die ausdrücklich Bezug genommen wird. (Die Trocknung und Pyrolyse, und wie oben erwähnt auch die Pressung, kann auch bei der Anwesenheit der Kohlenstoff-Kurzfasern 22 mit im wesentlichen den gleichen Parametern durchgeführt werden wie wenn das Ausgangsmaterial 12 keine Kohlenstoff-Kurzfasern 22 enthält.)

Das Ergebnis der Pyrolyse 38 ist ein offenporöser Kohlenstoffkörper. Dieser wird in einem Silicierungsschritt 40 siliciert. Dazu erfolgt eine Infiltration des Kohlenstoffkörpers durch Silicium umfassende Materialien, wobei eine Umwandlung in eine Silicium umfassende Carbidkeramik und insbesondere Si/SiC-Keramik erfolgt. Als Ausgangsmaterial für die Silicierung wird beispielsweise Siliciumgranulat 42 verwendet.

Der Silicierungsschritt ist in der nicht vorveröffentlichten DE 103 29 822 A1 beschrieben und es wird ausdrücklich darauf Bezug genommen.

Es ergibt sich dann ein Bauteil 44, welches unter Umständen durch spanabhebende Materialverarbeitung beispielsweise mit Diamantwerkzeugen nachbearbeitet wird, um ein fertiges Bauteil 32 herzustellen.

Erfindungsgemäß wird ein carbidkeramisches Material bzw. ein Bauteil aus solch einem Material bereitgestellt, welches über Kohlenstoff-Kurzfasern insbesondere mit einer Länge kleiner 6 mm und vorzugsweise kleiner 0,5 mm faserverstärkt ist. Es wird ein biomorphes Keramikmaterial bereitgestellt, welches schadenstolerant ist. Durch das erfindungsgemäße Verfahren läßt sich ein carbidkeramisches Material herstellen, bei dem Kohlenstoff-Kurzfasern in eine Si/SiC-reiche Keramikmatrix eingebettet sind und in der Matrix verteilt sind.

Dieses Gefügebild ist für ein erstes Ausführungsbeispiel in Figur 3 schematisch dargestellt:

In einer Si/SiC-Keramikmatrix sind Kohlenstoff-Kurzfasern 48 eingebettet verteilt.

Die Kohlenstoff-Kurzfasern 48 sind dabei mindestens teilweise von einer SiC-Hülle 50 umgeben.

Das entsprechende Material enthält einen hohen freien Siliciumanteil und der SiC-Anteil und ist rißfrei. Der KIC-Wert ist erhöht, d. h. die Schadenstoleranz ist gesteigert.

Der KIC-Wert ist ein Kennwert, der zur Charakterisierung sprödbrechender Keramiken dient. Er ist prüftechnisch zu ermitteln. Er beschreibt den Werkstoffwiderstand gegen instabile Rißausbreitung und ist damit ein bruchmechanisches Sicherheitskriterium. Hohe KIC-Werte bedeuten einen hohen Widerstand gegen Risse, d. h. ein Bauteil kann bei bekannter Rißgröße hohe Spannungen aufnehmen und damit stark beansprucht werden.

Die Bruchzähigkeit läßt sich beispielsweise nach dem SEVNB-Verfahren (Single-Edge-V-Notched-Beam-Verfahren) ermitteln, bei dem eine V-förmige Kerbe mit definierter Rißbreite und -tiefe in die Probe eingebracht wurde. Die Berechnung des KIC-Werts kann auf der Basis eines 4-Punkt-Biegeversuchs erfolgen.

Bei mit dem erfindungsgemäßen Verfahren hergestellten Materialien haben sich KIC-Werte von 2,8 MPa m^{0,5} und größer erzielen lassen.

Die erhöhte Schadenstoleranz ist darauf zurückzuführen, daß Rißenergie durch Herausziehen von Kohlenstoff-Kurzfasern aus dem Matrixgefüge verbraucht werden kann. Weiterhin kann Rißenergie durch Umlaufen der Kohlenstoff-Kurzfasern 48 verbraucht werden und durch Faserbruch verbraucht werden.

Erfindungsgemäß ist es vorgesehen, daß Kohlenstoff-Kurzfasern 22 bzw. 48 mit einer Faserlänge kleiner 6 mm und insbesondere kleiner 0,5 mm verwendet werden. Diese lassen sich gut mit dem Pulver mischen, welches wiederum beispielsweise feinkörnige Holzpartikel als cellulosehaltigen Anteil und Bindemittel enthält. Durch die kurze Faserlänge ist eine gute Mischbarkeit mit dem Pulver gewährleistet. Auch läßt sich während des Pressens in der Preßform 24 und der Pyrolyse 38 (die von einer Schrumpfung begleitet ist) ein mindestens näherungsweise flächenisotropes Verhalten gewährleisten. Die kurzen Kohlenstoffasern 48 können im Gegensatz zu langen Kohlenstoffasern mit der Matrix mitschrumpfen. Dadurch ist die Ausbildung makroskopischer Risse verhindert. Weiterhin besteht keine Gefahr der Delamination.

Durch die Verwendung von Kohlenstoff-Kurzfasern 22 kann die Schrumpfung der cellulosehaltigen Matrix und der Pyrolyse 38 erheblich vermindert werden. Dadurch wiederum läßt sich ein Bauteil 44 endkonturnah herstellen.

Weiterhin weisen Kohlenstoff-Kurzfasern auch bei hohen Temperaturen, wie sie bei der Pyrolyse 38 auftreten, in Faserrichtung eine nur sehr kleine irreversible Längenänderung auf. Dies trägt auch dazu bei, daß die Längenschwindung aufgrund der Pyrolyse 38 minimiert ist. Während der Pyrolyse ist zu jedem Zeitpunkt eine gute Faser-Matrix-Bindung gewährleistet.

Günstig ist es, wenn für die Kohlenstoff-Kurzfasern 22 solche mit einer genügend hohen K-Zahl verwendet werden. Insbesondere ist die K-Zahl größer Eins. Die K-Zahl charakterisiert die Anzahl der Filamente pro Faserbündel. Eine hohe K-Zahl ist vorteilhaft für eine gute Fasererhaltung während der Silicierung. Weiterhin ist der Faserdurchmesser der Filamente für die Wirksamkeit der Faserverstärkung von Bedeutung. Es sollte ein entsprechend großer Faserdurchmesser gewählt werden, um für eine gute Fasererhaltung während der Silicierung zu sorgen.

Wenn dünne Kurzfasern eingesetzt werden (mit Dicken von ca. 10 µm), dann ist vorzugsweise die K-Zahl groß. Alternativ können auch dicke Fasern eingesetzt werden beispielsweise mit einer Dicke von 20 µm oder mehr.

Günstig ist es ferner, wenn die Faserdichte der Kohlenstoff-Kurzfasern 22 (bezogen auf eine Faser) groß gewählt wird. Dadurch wird gewährleistet, daß bei der Umwandlung der Kohlenstoffmatrix des Kohlenstoffkörpers in Siliciumcarbid die Fasern bzw. das Faserbündel nur am Rand von flüssigem Silicium angegriffen werden und der Kern der Fasern erhalten bleibt, d. h. eine ausreichende Faserstruktur erhalten bleibt. Dies erhöht die Schadenstoleranz des hergestellten Keramikmaterials.

Bei einer weiteren Ausführungsform des erfindungsgemäßen Verfahrens, bei welchem die Kohlenstoff-Kurzfasern 22 vor der Vermischung mit den weiteren Ausgangsbestandteilen des Ausgangsmaterials 12 imprägniert werden, sind, wie in Figur 6 angedeutet, Kohlenstoff-Kurzfasern 52 von einer Harzhülle 54 umgeben. Die Harzhülle 54 wiederum ist ähnlich wie bei der Gefügestruktur gemäß Figur 3 von einer SiC-Hülle 56 mindestens teilweise umgeben. Die Kohlenstoff-Kurzfaser 52 mit ihrer Harzhülle 54 und der Hülle 56 sind in eine Si/SiC-Matrix 58 eingebettet.

Durch eine insbesondere gleichmäßige Umhüllung der Kohlenstoff-Kurzfasern 52 mit der kohlenstoffhaltigen Harzhülle 54 (insbesondere Pechharz-Hülle) läßt sich die Schadenstoleranz des hergestellten Materials verbessern, da die Kohlenstoff-Kurzfasern 52 vor einem Angriff der Siliciumschmelze während der Silicierung 40 geschützt sind.

Pechharze bilden insbesondere nach der Pyrolyse 38 eine dichte Schutzhülle um die Kohlenstoff-Kurzfasern 52. Die Harzhüllen 54 lassen sich, da sie keine Mikroporosität aufweisen, nur in ihren Randgebieten in SiC konvertieren.

Die Rißenergie eines aus solch einem Material hergestellten fertigen Bauteils kann durch Pull-Out-Effekte effektiv abgebaut werden; die Bindung der Kohlenstoff-Kurzfasern 52 in der Kohlenstoffmatrix der Harzhülle 54 ist im Vergleich zu einer Kohlenstoffaser-SiC-Bindung schwach. Da sich dann die Kohlenstoffasern gut von der Kohlenstoffmatrix der Harzhülle 54 ablösen lassen, ist die Bruchzähigkeit erhöht.

### 1. konkretes Ausführungsbeispiel:

Zur Herstellung einer Holzwerkstoff-Platte (mit den Abmessungen 140*140*10 mm³) mit einem Kohlenstoff-Kurzfaseranteil von 30 Massen-% wurden 30 Massen-% Phenolharz als Bindemittel und 40 Massen-% Buchenmehl (als cellulosehaltiges Pulver) zugemischt. Es wurden Pech-Kurzfasern mit einer Länge von 380 µm ± 80 µm und einem Durchmesser von 13 µm sowie einer Faserdichte von 1,65 g/cm³ eingesetzt. Die Pulver-Kohlenstoff-Kurzfasern-Mischung wurde in eine Preßform gegeben und axial zu einer Platte mit einer Dichte von 0,90 g/cm³ warm verpreßt. Nach der Pyrolyse bis 1650°C konnte ein Kohlenstoffkörper mit einer Dichte von 0,68 g/cm³ erzielt werden. Der Massenverlust betrug 53,3 %, die Volumenschrumpfung 38,3 %. Die Längenschrumpfung betrug 4,8 % bei einer Dickenschrumpfung von 31,8 %. Bei der Silicierung wurden 330 % Siliciumgranulat bezogen auf die Masse des Kohlenstoffkörpers eingesetzt.

Der faserverstärkte SiC-Werkstoff weist folgende Eigenschaften auf, die an Proben senkrecht zur Pressrichtung bestimmt wurden:
- Thermischer Ausdehnungskoeffizient (TAK) in der Plattenebene: 2,6*10⁻⁶ 1/K (RT-100°C)
- E-Modul: 294 GPa
- KIC-Wert: 2,8 MPa m^{0,5}, Spitzenwert 3,7 MPa m^{0,5}
- Dichte: 2,7 g/cm³
- 3-Punkt-Biegefestigkeit/Weibull-Modul: 185 MPa, m = 12
- Offene Porosität: 1,5 Vol.-%

Die kurzfaserverstärkte SiC-Keramik weist Massenanteile von SiC zu 58,2 %, Silicium zu 32 % und einem C-Anteil zu 8,3 % auf. Der C-Anteil besteht im wesentlichen aus den eingesetzten Kohlenstoff-Kurzfasern, die oberflächlich in SiC umgesetzt sind, so daß sich eine SiC-Hülle bildet. Der Matrixanteil an freiem Kohlenstoff hat sich fast vollständig in SiC umgesetzt.

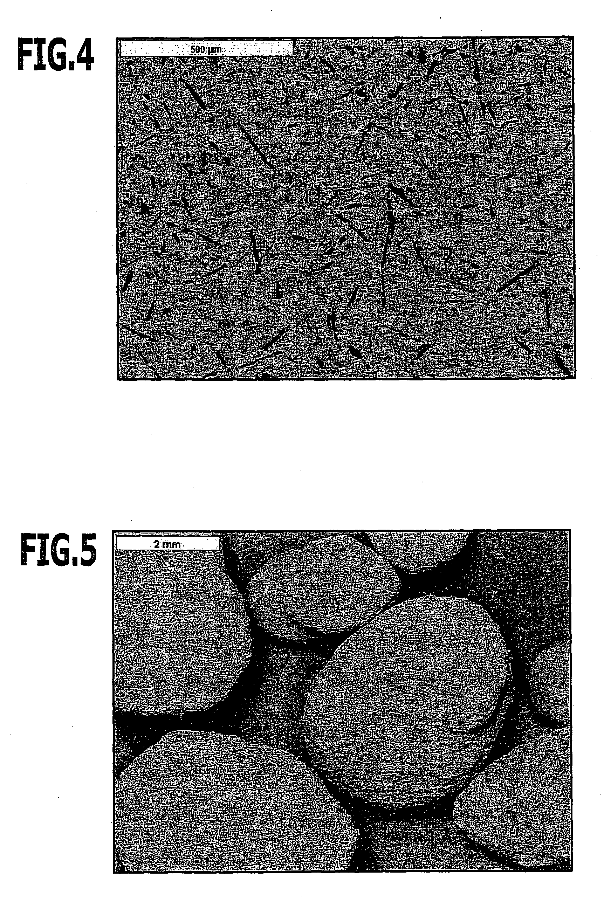

In Figur 4 ist die Mikrostruktur des kurzfaserverstärkten biomorphen SiC-Werkstoffs als Ergebnis einer REM-Aufnahme eines Anschliffs dargestellt.

### 2. konkretes Ausführungsbeispiel:

Mittels axialer Wärmepreßtechnik wurde mit Hilfe einer Stahlform als Preßgesenk als Beispiel einer Preßform 24, ausgestattet mit vier starren, nicht verformbaren Innenkernen aus Stahl, ein endkonturnahes, rißfreies Bauteil gepreßt (siehe Figur 2). Der Preßdruck betrug 1,14 MPa bei einer max. Aushärtetemperatur von 180°C. Das Bauteil wurde direkt in der Preßform ausgehärtet und vor dem Endformen noch in der Form abgekühlt. Die Masse des Bauteils betrug nach dem Preßvorgang 483,9 g. Als Preßmischung wurde Kokspulver (27 Massen-%), Phenolharz (18 Massen-%), Holzmehl vom Typ Lignocel HB120 (45 Massen-%), und Kohlenstoff-Kurzfasern auf Pechbasis mit einer Länge von 130 ± 40 µm (10 Massen-%) eingesetzt.

Die Länge, Breite und Höhe des Bauteils betrug 160x78x48 mm³.

Der Innendurchmesser der endkonturnah gepreßten und durchgängigen Bohrungen im Bauteil betrug 15,3 mm. Die Pyrolyse und Silicierung erfolgen wie im 1. konkreten Ausführungsbeispiel. Nach der Pyrolyse bis 1650°C konnte eine riß- und verzugsfreie Form erhalten werden. Die Schrumpfung während der Pyrolyse betrug 15,8 % in Dickenrichtung, 8,1 % in der Breite und 9,0 % in Längsrichtung. Der Durchmesser der Bohrungen reduzierte sich um 12,0 %, so daß sich ein Bauteil 32 mit den folgenden Abmessungen ergab: Dicke 40,6 mm, Breite 73,0 mm, Länge 145,8 mm, Durchmesser der Bohrungen 13,2 mm. Die Massenänderung während der Pyrolyse bis 1650°C betrug 43,5 %.

Das Bauteil 32 wurde mit 330 % Siliciumangebot siliciert, wobei das Silicium von der Unterseite des Bauteils angeboten wurde. Es ergab sich ein rißfreies Bauteil 32.

## Patentansprüche

1. Verfahren zur Herstellung eines Carbidkeramikmaterials, insbesondere Siliciumcarbidkeramikmaterials, bei welchem aus einem Ausgangsmaterials, welches cellulosehaltiges Pulver umfaßt, ein poröser Vorkörper hergestellt wird, der Vorkörper durch Pyrolyse in einen offenporösen Kohlenstoffkörper umgewandelt wird und der Kohlenstoffkörper durch Infiltration von Silicium umfassenden Materialien in eine Silicium umfassende Carbidkeramik umgewandelt wird,
**dadurch gekennzeichnet , daß** zurHerstellungdesAusgangsmaterials Kohlenstoff-Kurzfasern verwendet werden.

2. Verfahren nach Anspruch 1, **dadurch gekennzeichnet, daß** die Faserlänge der Kohlenstoff-Kurzfasern so klein gewählt wird, daß diese sich mit Pulveranteilen des Ausgangsmaterials mischen lassen.

3. Verfahren nach Anspruch 1 oder 2, **dadurch gekennzeichnet, daß** die Faserlänge der Kohlenstoff-Kurzfasern so kurz gewählt wird, daß bei der Herstellung des Vorkörpers durch Pressen ein mindestens näherungsweise flächenisotropes Verhalten des Ausgangsmaterials vorliegt.

4. Verfahren nach einem der vorangehenden Ansprüche, **dadurch gekennzeichnet, daß** die Faserlänge der Kohlenstoff-Kurzfasern so kurz gewählt wird, daß bei der Pyrolyse ein mindestens näherungsweise flächenisotropes Verhalten des Kohlenstoffkörpers vorliegt.

5. Verfahren nach einem der vorangehenden Ansprüche, **dadurch gekennzeichnet, daß** die Faserlänge der Kohlenstoff-Kurzfasern und/oder der Faseranteil so gewählt wird, daß die Längenschwindung eines hergestellten Bauteils im Vergleich zum Vorkörper kleiner 10 % ist.

6. Verfahren nach einem der vorangehenden Ansprüche, **dadurch gekennzeichnet, daß** die Länge der Kohlenstoff-Kurzfasern kleiner 6 mm ist.

7. Verfahren nach einem der vorangehenden Ansprüche, **dadurch gekennzeichnet, daß** die Länge der Kohlenstoff-Kurzfasern kleiner 3 mm ist.

8. Verfahren nach einem der vorangehenden Ansprüche, **dadurch gekennzeichnet, daß** die Länge der Kohlenstoff-Kurzfasern kleiner 0,5 mm ist.

9. Verfahren nach einem der vorangehenden Ansprüche, **dadurch gekennzeichnet, daß** Kohlenstoff-Kurzfasern dem Ausgangsmaterial zugemischt sind oder werden.

10. Verfahren nach einem der vorangehenden Ansprüche, **dadurch gekennzeichnet, daß** mit einer Imprägnierungsumhüllung versehene Kohlenstoff-Kurzfasern dem Ausgangsmaterial zugemischt sind oder werden.

11. Verfahren nach Anspruch 10, **dadurch gekennzeichnet, daß** die Kohlenstoff-Kurzfasern mit einem Kohlenstoff umfassenden Material umhüllt werden.

12. Verfahren nach Anspruch 10 oder 11, **dadurch gekennzeichnet, daß** Kohlenstoff-Kurzfasern mit einer Pechharzschicht umhüllt werden.

13. Verfahren nach Anspruch 12, **dadurch gekennzeichnet, daß** die Pechharzschicht graphitiert wird.

14. Verfahren nach Anspruch 12 oder 13, **dadurch gekennzeichnet, daß** Fasern mit Pechharz in Kontakt gebracht werden und das Pechharz anschließend vorgehärtet wird.

15. Verfahren nach Anspruch 14, **dadurch gekennzeichnet, daß** die Kohlenstoff-Kurzfasern mit flüssigem oder pulverförmigem Pechharz vermischt werden.

16. Verfahren nach Anspruch 13 oder 14, **dadurch gekennzeichnet, daß** Pechharz auf Fasern aufgespritzt wird.

17. Verfahren nach einem der Ansprüche 14 bis 16, **dadurch gekennzeichnet, daß** die Pechharzvorhärtung durch Temperaturerhöhung erfolgt.

18. Verfahren nach einem der Ansprüche 11 bis 17, **dadurch gekennzeichnet, daß** die Umhüllung der Kohlenstoff-Kurzfasern vor der Vermischung mit dem cellulosehaltigen Pulver durchgeführt wird.

19. Verfahren nach einem der vorangehenden Ansprüche, **dadurch gekennzeichnet, daß** als Ausgangsmaterial eine Pulver-Kohlenstoff-Kurzfasern-Mischung verwendet wird.

20. Verfahren nach einem der vorangehenden Ansprüche, **dadurch gekennzeichnet, daß** eine mindestens näherungsweise isotrope Faserorientierung eingestellt wird.

21. Verfahren nach Anspruch 19 oder 20, **dadurch gekennzeichnet, daß** aus der Pulver-Kohlenstoff-Kurzfasern-Mischung ein Granulat hergestellt wird.

22. Verfahren nach Anspruch 21, **dadurch gekennzeichnet, daß** der Größenbereich von Granulatpartikeln im Micrometer- bis Millimeter-Bereich liegt.

23. Verfahren nach einem der Ansprüche 19 bis 22, **dadurch gekennzeichnet, daß** der Pulver-Kohlenstoff-Kurzfasern-Mischung ein Anfeuchtmittel zugegeben wird.

24. Verfahren nach einem der Ansprüche 21 bis 23, **dadurch gekennzeichnet, daß** Granulatvorpartikel auf einem Peletierteller gerollt werden.

25. Verfahren nach Anspruch 23 oder 24, **dadurch gekennzeichnet, daß** das Granulat getrocknet wird.

26. Verfahren nach Anspruch 25, **dadurch gekennzeichnet, daß** die Trocknung so durchgeführt wird, daß keine Bindemittelaushärtung erfolgt.

27. Verfahren nach Anspruch 25 oder 26, **dadurch gekennzeichnet, daß** die Trocknung bei Unterdruckbeaufschlagung durchgeführt wird.

28. Verfahren nach einem der Ansprüche 25 bis 27, **dadurch gekennzeichnet, daß** zur Trocknung ein Austreibmittel für das Anfeuchtmittel verwendet wird, welches einen höheren Dampfdruck aufweist als das Anfeuchtmittel.

29. Verfahren nach einem der Ansprüche 21 bis 28, **dadurch gekennzeichnet, daß** Granulatpartikel gemäß ihrer Größe ausgewählt werden.

30. Verfahren nach Anspruch 29, **dadurch gekennzeichnet, daß** das Granulat zur Größenauswahl gesiebt wird.

31. Verfahren nach Anspruch 29 oder 30, **dadurch gekennzeichnet, daß** Granulatpartikel gemäß einer bimodalen Partikelgrößenverteilung ausgewählt werden.

32. Verfahren nach einem der Ansprüche 1 bis 19, **dadurch gekennzeichnet, daß** ein anisotroper Vorkörper hergestellt wird.

33. Verfahren nach Anspruch 32, **dadurch gekennzeichnet, daß** Kohlenstoff-Kurzfasern beim Füllen einer Pressform einer losen Pulverschüttung gesteuert zugegeben werden.

34. Verfahren nach einem der vorangehenden Ansprüche, **dadurch gekennzeichnet, daß** das cellulosehaltige Pulver Holzpulver und/oder Cellulosepulver enthält.

35. Verfahren nach einem der vorangehenden Ansprüche, **dadurch gekennzeichnet, daß** das Ausgangsmaterial für den Vorkörper Bindemittel umfaßt.

36. Verfahren nach einem der vorangehenden Ansprüche, **dadurch gekennzeichnet, daß** das Ausgangsmaterial zu einem Formkörper verpreßt wird.

37. Verfahren nach Anspruch 36, **dadurch gekennzeichnet, daß** der Formkörper zum Aushärten des Bindemittels aufgeheizt wird.

38. Verfahren nach einem der vorangehenden Ansprüche, **dadurch gekennzeichnet, daß** der Kohlenstoffkörper endkonturnah hergestellt wird.

39. Verfahren nach einem der vorangehenden Ansprüche, **dadurch gekennzeichnet, daß** eine Silicierung durch Aufschmelzen von Siliciumgranulat durchgeführt wird.

40. Verfahren nach einem der vorangehenden Ansprüche, **dadurch gekennzeichnet, daß** eine verdichtete Oberfläche vor der Silicierung entfernt wird.

41. Carbidkeramikmaterial, insbesondere Siliciumcarbidkeramikmaterial, bei welchem in einer Si/SiC-reichen Keramikmatrix (46; 58) Kohlenstoff-Kurzfasern (48; 52) verteilt eingebettet sind.

42. Carbidkeramikmaterial nach Anspruch 41, **dadurch gekennzeichnet, daß** die Kohlenstoff-Kurzfasern (48; 52) mindestens teilweise von einer SiC-Hülle (50; 56) umgeben sind.

43. Carbidkeramikmaterial nach Anspruch 42, **dadurch gekennzeichnet, daß** die SiC-Hüllen (50; 56) in eine Si/SiC-Matrix (46; 58) eingebettet sind.

44. Carbidkeramikmaterial nach einem der Ansprüche 41 bis 43, **dadurch gekennzeichnet, daß** die Länge der Kohlenstoff-Kurzfasern (48; 52) kleiner 6 mm ist.

45. Carbidkeramikmaterial nach einem der Ansprüche 41 bis 44, **dadurch gekennzeichnet, daß** die Länge der Kohlenstoff-Kurzfasern (48; 52) kleiner 3 mm ist.

46. Carbidkeramikmaterial nach einem der Ansprüche 41 bis 45, **dadurch gekennzeichnet, daß** die Länge der Kohlenstoff-Kurzfasern (48; 52) kleiner 0,5 mm ist.

47. Carbidkeramikmaterial nach einem der Ansprüche 41 bis 46, **gekennzeichnet durch** eine **durch** Verwendung von cellulosehaltigem Pulver (16) und Bindemittel (18) im Ausgangsmaterial (12) hergestellte im wesentlichen homogene Gefügestruktur.

48. Carbidkeramikmaterial nach einem der Ansprüche 41 bis 47, **dadurch gekennzeichnet, daß** die Kohlenstoff-Kurzfasern (48; 52) mindestens näherungsweise isotrop orientiert sind.

49. Carbidkeramikmaterial nach einem der Ansprüche 41 bis 48, **dadurch gekennzeichnet, daß** die Kohlenstoff-Kurzfasern (48; 52) von einer Imprägnierungs-Umhüllung (54) umgeben sind.

50. Carbidkeramikmaterial nach Anspruch 49, **dadurch gekennzeichnet, daß** die Imprägnierungs-Umhüllung (54) mindestens teilweise von einer SiC-Hülle (56) umgeben ist.

51. Carbidkeramikmaterial nach einem der Ansprüche 41 bis 50, **dadurch gekennzeichnet, daß** der Si-Anteil größer 25 Massen-% ist.

52. Carbidkeramikmaterial nach einem der Ansprüche 41 bis 51, **dadurch gekennzeichnet, daß** der SiC-Anteil größer 50 Massen-% ist.

53. Carbidkeramikmaterial nach einem der Ansprüche 41 bis 52, welches gemäß dem Verfahren nach einem der Ansprüche 1 bis 40 hergestellt ist.

54. Bauteil aus Strukturkeramik und/oder Funktionskeramik, welches durch das Carbidkeramikmaterial gemäß einem der Ansprüche 41 bis 53 hergestellt ist.

55. Vorkörper für ein carbidkeramisches Bauteil, insbesondere für ein aus einer Siliciumcarbidkeramik hergestelltes Bauteil, aus welchem durch Pyrolyse ein silicierbarer Kohlenstoffkörper herstellbar ist, wobei der Vorkörper mindestens gebundenes cellulosehaltiges Pulver als Ausgangsbestandteil aufweist, **dadurch gekennzeichnet, daß** der Vorkörper Kohlenstoff-Kurzfasern enthält.

56. Vorkörper nach Anspruch 55, **dadurch gekennzeichnet, daß** die Länge der Kohlenstoff-Kurzfasern kleiner 6 mm ist.

57. Vorkörper nach Anspruch 55 oder 56, **dadurch gekennzeichnet, daß** die Länge der Kohlenstoff-Kurzfasern kleiner 3 mm ist.

58. Vorkörper nach einem der Ansprüche 55 bis 57, **dadurch gekennzeichnet, daß** die Länge der Kohlenstoff-Kurzfasern kleiner 0,5 mm ist.

59. Vorkörper nach einem der Ansprüche 55 bis 58, **dadurch gekennzeichnet, daß** die Kohlenstoff-Kurzfasern mit einer kohlenstoffhaltigen Umhüllung versehen sind.

60. Vorkörper nach einem der Ansprüche 55 bis 59, **dadurch gekennzeichnet, daß** die Kohlenstoff-Kurzfasern im wesentlichen isotrop orientiert sind.

61. Verfahren zur Bereitstellung eines Ausgangsmaterials für einen Vorkörper für ein carbidkeramisches Bauteil, bei dem eine trockene Pulvermischung des Ausgangsmaterials des Vorkörpers zur Granulatbildung angefeuchtet wird.

62. Verfahren nach Anspruch 61, **dadurch gekennzeichnet, daß** als Anfeuchtmittel Wasser verwendet wird.

63. Verfahren nach Anspruch 61 oder 62, **dadurch gekennzeichnet, daß** das Vorgranulat auf einem Peletierteller gerollt wird.

64. Verfahren nach einem der Ansprüche 61 bis 63, **dadurch gekennzeichnet, daß** das Granulat getrocknet wird.

65. Verfahren nach Anspruch 64, **dadurch gekennzeichnet, daß** die Trocknung so durchgeführt wird, daß keine Bindemittelaushärtung erfolgt.

66. Verfahren nach Anspruch 65, **dadurch gekennzeichnet, daß** die Trocknung bei Unterdruckbeaufschlagung durchgeführt wird.

67. Verfahren nach Anspruch 65 oder 66, **dadurch gekennzeichnet, daß** zur Trocknung ein Austreibmittel für das Anfeuchtmittel verwendet wird, welches einen höheren Dampfdruck als das Anfeuchtmittel aufweist.

68. Verfahren nach einem der Ansprüche 61 bis 67, **dadurch gekennzeichnet, daß** Granulatpartikel gemäß ihrer Größe ausgewählt werden.

69. Verfahren nach Anspruch 68, **dadurch gekennzeichnet, daß** die Größenauswahl durch Sieben erfolgt.

70. Verfahren nach Anspruch 68 oder 69, **dadurch gekennzeichnet, daß** eine Größenauswahl gemäß einer bimodalen Verteilung durchgeführt wird.

71. Verfahren nach einem der Ansprüche 61 bis 70, **dadurch gekennzeichnet, daß** der Pulvermischung Kohlenstoff-Kurzfasern zugegeben sind oder werden.

72. Verwendung eines Granulats, welches mittels cellulosehaltigem Pulver und Kohlenstoff-Kurzfasern hergestellt ist, als Ausgangsmaterial zum Spritzgießen oder Extrudieren.

73. Verwendung nach Anspruch 72, **dadurch gekennzeichnet, daß** das Granulat Phenolharz als Bindemittel umfaßt.
